(19) Europäisches Patentamt
European Patent Office
Office européen des brevets

(11) EP 2 560 492 B1

(12) **EUROPEAN PATENT SPECIFICATION**

(45) Date of publication and mention of the grant of the patent:
**04.03.2015 Bulletin 2015/10**

(21) Application number: **11714775.1**

(22) Date of filing: **18.04.2011**

(51) Int Cl.:
***A01N 43/90*** *(2006.01)*

(86) International application number:
**PCT/EP2011/056096**

(87) International publication number:
**WO 2011/131602 (27.10.2011 Gazette 2011/43)**

(54) **FUNGICIDAL MIXTURES COMPRISING AMETOCTRADIN AND A TETRAZOLOXIME DERIVATIVE**

FUNGIZIDE MISCHUNGEN ENTHALTEND AMETOCTRADIN UND EIN TETRAZOLOXIMEDERIVAT

MÉLANGES FONGICIDES COMPRÉNANT D'AMÉTOCTRADINE ET UN DÉRIVÉ DE TÉTRAZOLYLOXIME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 EP 10160479**
**20.04.2010 US 325834 P**

(43) Date of publication of application:
**27.02.2013 Bulletin 2013/09**

(73) Proprietor: **BASF SE**
**67056 Ludwigshafen (DE)**

(72) Inventors:
- **GEWEHR, Markus**
  **56288 Kastellaun (DE)**
- **DIETZ, Jochen**
  **76227 Karlsruhe (DE)**
- **GROTE, Thomas**
  **67157 Wachenheim (DE)**
- **HADEN, Egon**
  **67346 Speyer (DE)**

(56) References cited:
**WO-A2-2009/090181 US-A1- 2008 234 295**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a fungicidal mixture comprising, as active components:

1) azolopyrimidinylamine of the formula I,

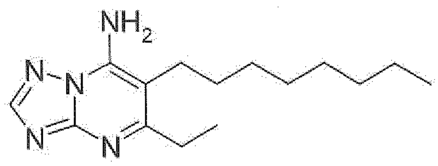

(I)

and

2) at least one tetrazolyloxime derivative of the formula II A

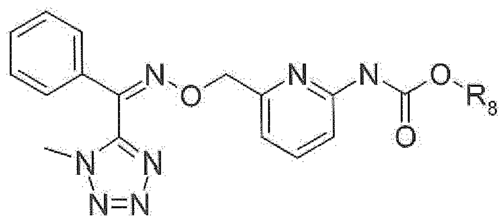

(IIA)

in which

$R^8$ is branched or unbranched $C_1$-$C_8$-alkyl;

in a synergistically effective amount.

Furthermore the present invention relates to an agrochemical composition, comprising a liquid or solid carrier and the fungicidal mixture.

Furthermore the present invention relates to seed, comprising the fungicidal mixture or the composition in an amount of form 1 to 1000 g/100 kg of seed.

Furthermore the present invention relates to a method for controlling phytopathogenic harmful fungi, comprising treating the fungi, their habitat or the seed, the soil or the plants to be protected against fungal attack with an effective amount of the fungicidal mixture or the composition.

Furthermore the present invention relates to a method for improving plant health, comprising treating a plant, its propagation material, locus where the plant is growing or is to grow with an effective amount of the fungicidal mixture or the composition.

Fungicidal mixtures comprising the azolopyrimidinylamine of the formula I have been already described in the literature (WO 2007/012598, PCT/EP 2010/052873, WO 08/092836). Fungicidal mixtures comprising tetrazolyloxime derivatives of the formula II are known from WO 09/119072 and WO 09/90181.

Practical agricultural experience has shown that the repeated and exclusive application of an individual active compound in the control of harmful fungi or insects or other pests leads in many cases to a rapid selection of those fungus strains or pest isolates which have developed natural or adapted resistance against the active compound in question. Effective control of these fungi or pests with the active compound in question is then no longer possible.

To reduce the risk of the selection of resistant fungus strains or insect isolates, mixtures of different active compounds are nowadays conventionally employed for controlling harmful fungi or insects or other pests. By combining active compounds having different mechanisms of action, it is possible to ensure successful control over a relatively long period of time.

It is an object of the present invention to provide, with a view to effective resistance management and effective control of phytopathogenic harmful fungi, insects or other pests, at application rates which are as low as possible, compositions which, at a reduced total amount of active compounds applied, have improved activity against the harmful fungi or pests (synergistic mixtures) and a broadened activty spectrum, in particular for certain indications.

We have accordingly found that this object is achieved by the fungicidal mixtures, defined herein, comprising compound of the formula I and at least one compound of the formula II. The mixtures of the compound of the formula I and an active compound of the formula II or the simultaneous, that is joint or separate, use of the compound of the

formula I and an active compound of the formula II are/is distinguished by excellent activity against a broad spectrum of phytopathogenic fungi. Some of them are systemically active and can be used in crop protection as foliar fungicides, as fungicides for seed dressing and as soil fungicides.

The terms used for organic groups in the definition of the variables are, for example the expression "halogen", collective terms which represent the individual members of these groups of organic units.

The prefix $C_x$-$C_y$ denotes the number of possible carbon atoms in the particular case. halogen: fluorine, bromine, chlorine or iodine, especially fluorine, chlorine or bromine;

alkyl and the alkyl moieties of composite groups such as, for example, alkoxy, alkylamino, alkoxycarbonyl, alkylcarbonylamino, alkoxycarbonylamino, alkylaminocarbonylamino: saturated straight-chain or branched hydrocarbon radicals having 1 to 12 carbon atoms, for example $C_1$-$C_{12}$-akyl, such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, octyl, dodecyl;

haloalkyl: straight-chain or branched alkyl groups having 1 to 2, 4, 6 or 8 carbon atoms (as mentioned above), where some or all of the hydrogen atoms in these groups are replaced by halogen atoms as mentioned above. In one embodiment, the alkyl groups are substituted at least once or completely by a particular halogen atom, preferably fluorine, chlorine or bromine. In a further embodiment, the alkyl groups are partially or fully halogenated by different halogen atoms; in the case of mixed halogen substitutions, the combination of chlorine and fluorine is preferred. Particular preference is given to ($C_1$-$C_3$)-haloalkyl, more preferably ($C_1$-$C_2$)-haloalkyl, such as chloromethyl, bromomethyl, dichloromethyl, trichloromethyl, fluoromethyl, difluoromethyl, trifluoromethyl, chlorofluoromethyl, dichlorofluoromethyl, chlorodifluoromethyl, 1-chloroethyl, 1-bromoethyl, 1-fluoroethyl, 2-fluoroethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, pentafluoroethyl or 1,1,1-trifluoroprop-2-yl;

alkenyl and also the alkenyl moieties in composite groups, such as alkenyloxy: unsaturated straight-chain or branched hydrocarbon radicals having 2 to 4, 2 to 6 or 2 to 8 carbon atoms and one double bond in any position. According to the invention, it may be preferred to use small alkenyl groups, such as ($C_2$-$C_4$)-alkenyl; on the other hand, it may also be preferred to employ larger alkenyl groups, such as ($C_5$-$C_8$)-alkenyl. Examples of alkenyl groups are, for example, $C_2$-$C_6$-alkenyl, such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl;

alkoxy: an alkyl group as defined above which is attached via an oxygen, preferably having 1 to 8, more preferably 2 to 6, carbon atoms. Examples are: methoxy, ethoxy, n-propoxy, 1-methylethoxy, butoxy, 1-methylpropoxy, 2-methylpropoxy or 1,1-dimethylethoxy, and also for example, pentoxy, 1-methylbutoxy, 2-methylbutoxy, 3-methylbutoxy, 1,1-dimethylpropoxy, 1,2-dimethylpropoxy, 2,2-dimethylpropoxy, 1-ethylpropoxy, hexyloxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy or 1-ethyl-2-methylpropoxy;

cyano: CN group which is attached via an C atom;

nitro: $NO_2$ group which is attached via an N atom;

amino: $NR_2$ group, which is attached via an N atom;

carbonyl: COR group, which is attached via an C atom.

The azolopyrimidin-7-ylamin of the formula I referred to above as component 1, its preparation and its action against harmful fungi are known from the literature (EP-A 71 792; EP-A 141 317; WO 03/009687; WO 05/087771; WO 05/087772; WO 05/087773; WO 2005/087772; WO 2006/087325; WO 2006/092428).

The tertazolyloxim derivatives of the formula IIA referred to above as component 2 are described in WO 03/16303.

According to one embodiment of the invention the fungicidal mixtures comprise as component 2 a compound of the formula II A

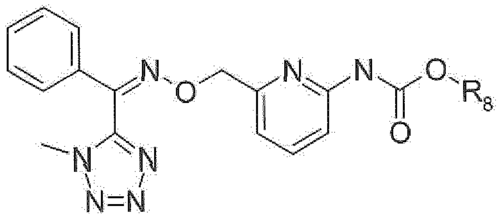

(IIA)

in which

$R^8$ is branched or unbranched $C_1$-$C_8$-alkyl.

Particularly preference is given to the fungicidal mixtures comprising as component 2 a compound selescted from the group consisting of A-18 to A-34 as listed in Table A, where a row of Table A corresponds in each case to an individualized compound of the formula II-B.

Table A: Compounds of the formula II-B (component 2)

| 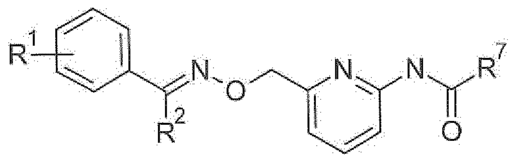 (II-B) | | | | |
|---|---|---|---|---|
| 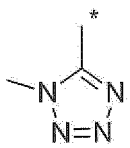 $R^2$-I | | | | |
| | | **Substituents** | | |
| **No.** | **II-B** | **$R^1$** | **$R^2$** | **$R^7$** |
| A-18 | II-B | H | $R^2$-I | methoxy |
| A-19 | II-8 | H | $R^2$-I | ethoxy |
| A-20 | II-B | H | $R^2$-I | n-propoxy |
| A-21 | II-B | H | $R^2$-I | iso-propoxy |
| A-22 | II-B | H | $R^2$-I | n-butoxy |
| A-23 | II-B | H | $R^2$-I | iso-butoxy |
| A-24 | II-B | H | $R^2$-I | tert-butoxy |
| A-25 | II-B | H | $R^2$-I | n-pentoxy |
| A-26 | II-B | H | $R^2$-I | 1-methylbutoxy |
| A-27 | II-B | H | $R^2$-I | 2-methylbutoxy |
| A-28 | II-B | H | $R^2$-I | 3-methylbutoxy |
| A-29 | II-B | H | $R^2$-I | 1,1-dimethylpropoxy |
| A-30 | II-B | H | $R^2$-I | 1,2-dimethylpropoxy |
| A-31 | II-B | H | $R^2$-I | 2,2-dimethylpropoxy |
| A-32 | II-B | H | $R^2$-I | n-hexyloxy |

(continued)

| | | Substituents | | |
|---|---|---|---|---|
| No. | II-B | $R^1$ | $R^2$ | $R^7$ |
| A-33 | II-B | H | $R^2$-I | n-heptyloxy |
| A-34 | II-B | H | $R^2$-I | n-octyloxy |

A further embodiment of the present invention relates to the compositions B-1 to B-17 listed in Table B, where a row of Table B corresponds in each case to a fungicidal composition comprising azolpyrimidinylamine of the formula I (component 1) and the respective further compound selected from A-18 to A-34 according to Table A (component 2) stated in the row in question. Preferably, the compositions described comprise the active substances in synergistically effective amounts.

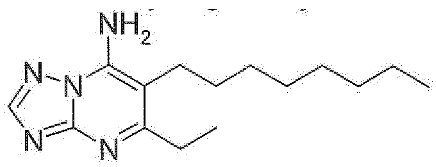

(I)

Table B: Composition comprising azolpyrimidinylamine of the formula I and one further active substance selected from A-18 to A-34

| Mixture | Components | |
|---|---|---|
| | 1 | 2 |
| B-1 | I | A-18 |
| B-2 | I | A-19 |
| B-3 | I | A-20 |
| B-4 | I | A-21 |
| B-5 | I | A-22 |
| B-6 | I | A-23 |
| B-7 | I | A-24 |
| B-8 | I | A-25 |
| B-9 | I | A-26 |
| B-10 | I | A-27 |
| B-11 | I | A-28 |
| B-12 | I | A-29 |
| B-13 | I | A-30 |
| B-14 | I | A-31 |
| B-15 | I | A-32 |
| B-16 | I | A-33 |
| B-17 | I | A-34 |

The active compounds mentioned above can also be employed in the form of their agriculturally compatible salts. These are usually the alkali metal or alkaline earth metal salts, such as sodium, potassium or calcium salts.

The compound of the formula I and active compounds of the formula IIA can be applied simultaneously, that is jointly or separately, or in succession, the sequence, in the case of separate application, generally not having any

effect on the result of the control measures

The compound of the formula I and/or the compounds of the formula IIA of the inventive compositions can be present in different crystal modifications, which may differ in biological activity.

Preference is also given to three component mixtures (ternary mixtures) comprising a further active compound. It is obvious that the active compound of the formula IIA and the further compound should be different.

The following list of active compounds, in conjunction with which the compounds according to the invention can be used, is intended to illustrate the possible combinations but does not limit them:

A) strobilurins

- azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-[2-(2,5-dimethyl-phenoxymethyl)-phenyl]-3-methoxy-acrylic acid methyl ester and 2-(2-(3-(2,6-dichlorophenyl)-1-mekhyl-allylideneaminooxymethyl)-phenyl)-2-methoxyimino-N-methyl-acetamide;

B) carboxamides

- carboxanilides: benalaxyl, benalaxyl-M, benodanil, bixafen, boscalid, carboxin, fenfuram, fenhexamid, flutolanil, fluxapyroxad, furametpyr, isopyrazam, isotianil, kiralaxyl, mepronil, metalaxyl, metalaxyl-M (mefenoxam), ofurace, oxadixyl, oxycarboxin, penflufen, penthiopyrad, sedaxane, tecloftalam, thifluzamide, tiadinil, 2-amino-4-methyl-thiazole-5-carboxanilide, N-(4'-trifluoromethylthiobiphenyl-2-yl)-3-difluoromethyl-1-mekhyl-1H-pyrazole-4-carboxamide and N-(2-(1,3,3-trimethyl-butyl)-phenyl)-1,3-dimethyl-5-fluoro-1 H-pyrazole-4-carboxamide;

- carboxylic morpholides: dimethomorph, flumorph, pyrimorph;

- benzoic acid amides: flumetover, fluopicolide, fluopyram, zoxamide;

- other carboxamides: carpropamid, dicyclomet, mandiproamid, oxytetracyclin, silthiofam and N-(6-methoxy-pyridin-3-yl) cyclopropanecarboxylic acid amide;

C) azoles

- triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole;

- imidazoles: cyazofamid, imazalil, pefurazoate, prochloraz, triflumizol;

- benzimidazoles: benomyl, carbendazim, fuberidazole, thiabendazole;

- others: ethaboxam, etridiazole, hymexazole and 2-(4-chloro-phenyl)-N-[4-(3,4-dimethoxy-phenyl)-isoxazol-5-yl]-2-prop-2-ynyloxy-acetamide;

D) heterocyclic compounds

- pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine;

- pyrimidines: bupirimate, cyprodinil, diflumetorim, fenarimol, ferimzone, mepani-pyrim, nitrapyrin, nuarimol, pyrimethanil;

- piperazines: triforine;

- pyrroles: fenpiclonil, fludioxonil;

- morpholines: aldimorph, dodemorph, dodemorph-acetate, fenpropimorph, tridemorph;
- piperidines: fenpropidin;
- dicarboximides: fluoroimid, iprodione, procymidone, vinclozolin;
- non-aromatic 5-membered heterocycles: famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester;
- others: acibenzolar-S-methyl, ametoctradin, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1H-benzoimidazole and 5-chloro-7-(4-methylpiperidin-1-yl)-6-(2,4,6-trifluorophenyl)-[1,2,4]triazolo-[1,5-a]pyrimidine;

E) carbamates

- thio- and dithiocarbamates: ferbam, mancozeb, maneb, metam, methasulphocarb, metiram, propineb, thiram, zineb, ziram;
- carbamates: benthiavalicarb, diethofencarb, iprovalicarb, propamocarb, propamocarb hydrochlorid, valifenalate and N-(1-(1-(4-cyano-phenyl)ethanesulfonyl)-but-2-yl) carbamic acid-(4-fluorophenyl) ester;

F) other active substances

- guanidines: guanidine, dodine, dodine free base, guazatine, guazatine-acetate, iminoctadine, iminoctadine-triacetate, iminoctadine-tris(albesilate);
- antibiotics: kasugamycin, kasugamycin hydrochloride-hydrate, streptomycin, poly-oxine, validamycin A;
- nitrophenyl derivates: binapacryl, dicloran, dinobuton, dinocap, nitrothal-isopropyl, tecnazen,
  organometal compounds: fentin salts, such as fentin-acetate, fentin chloride or fentin hydroxide;
- sulfur-containing heterocyclyl compounds: dithianon, isoprothiolane;
- organophosphorus compounds: edifenphos, fosetyl, fosetyl-aluminum, iprobenfos, phosphorous acid and its salts, pyrazophos, tolclofos-methyl;
- organochlorine compounds: chlorothalonil, dichlofluanid, dichlorophen, flusulfamide, hexachlorobenzene, pencycuron, pentachlorphenole and its salts, phthalide, quinto-zene, thiophanate-methyl, tolylfluanid, N-(4-chloro-2-nitro-phenyl)-N-ethyl-4-methyl-benzenesulfonamide;
- inorganic active substances: Bordeaux mixture, copper acetate, copper hydroxide, copper oxychloride, basic copper sulfate, sulfur;
- antifungal biocontrol agents, plant bioactivators: *Ampelomyces quisqualis* (e.g. AQ 10® from Intrachem Bio GmbH & Co. KG, Germany), *Aspergillus flavus* (e.g. AFLAGUARD® from Syngenta, CH), *Aureobasidium pullulans* (e.g. BOTECTOR® from bio-ferm GmbH, Germany), *Bacillus pumilus* (e.g. NRRL Accession No. B-30087 in SONATA® and BALLAD® Plus from AgraQuest Inc., USA), *Bacillus subtilis* (e.g. isolate NRRL-Nr. B-21661 in RHAPSODY®, SERENADE® MAX and SERENADE® ASO from AgraQuest Inc., USA), *Bacillus subtilis* var. *amylolique-faciens* FZB24 (e.g. TAEGRO® from Novozyme Biologicals, Inc., USA), *Candida oleophila* I-82 (e.g. ASPIRE® from Ecogen Inc., USA), *Candida saitoana* (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), *Clonostachys rosea f. catenulata,* also named *Gliocladium catenulatum* (e.g. isolate J1446: PRESTOP® from Verdera, Finland), *Coniothyrium minitans* (e.g. CONTANS® from Prophyta, Germany), *Cryphonectrl-Aparasitica* (e.g. *Endothl-Aparasitica* from CNICM, France), *Cryptococcus albidus* (e.g. YIELD PLUS® from Anchor Bio-Technologies, South Africa), *Fusarium oxysporum* (e.g. BIOFOX® from S.I.A.P.A., Italy, FUSACLEAN® from Natural Plant Protection, France), *Metschnikowl-Afructicola* (e.g. SHEMER® from Agrogreen, Israel), *Microdo-*

*chium dimerum* (e.g. ANTIBOT® from Agrauxine, France), *Phlebiopsis gigantea* (e.g. ROTSOP® from Verdera, Finland), *Pseudozyma flocculosa* (*e.g.* SPORODEX® from Plant Products Co. Ltd., Canada), *Pythium oligandrum* DV74 (e.g. POLYVERSUM® from Remeslo SSRO, Biopreparaty, Czech Rep.), *Reynoutria sachlinensis* (e.g. REGALIA® from Marrone BioInnovations, USA), *Talaromyces flavus* V117b (e.g. PROTUS® from Prophyta, Germany), *Trichoderma asperellum* SKT-1 (e.g. ECO-HOPE® from Kumiai Chemical Industry Co., Ltd., Japan), *T. atroviride* LC52 (e.g. SENTINEL® from Agrimm Technologies Ltd, NZ), *T. harzianum* T-22 (e.g. PLANTSHIELD® der Firma BioWorks Inc., USA), *T. harzianum* TH 35 (e.g. ROOT PRO® from Mycontrol Ltd., Israel), *T. harzianum* T-39 (e.g. TRICHODEX® and TRICHODERMA 2000® from Mycontrol Ltd., Israel and Makhteshim Ltd., Israel), *T. harzianum* and *T. viride* (e.g. TRICHOPEL from Agrimm Technologies Ltd, NZ), *T. harzianum* ICC012 and *T. viride* ICC080 (e.g. REMEDIER® WP from Isagro Ricerca, Italy), *T. polysporum* and *T. harzianum* (e.g. BINAB® from BINAB Bio-Innovation AB, Sweden), *T. stromaticum* (e.g. TRICOVAB® from C.E.P.L.A.C., Brazil), *T. virens* GL-21 (e.g. SOILGARD® from Certis LLC, USA), *T. viride* (e.g. TRIECO® from Ecosense Labs. (India) Pvt. Ltd., Indien, BIO-CURE® F from T. Stanes & Co. Ltd., Indien), *T. viride* TV1 (e.g. T. viride TV1 from Agribiotec srl, Italy), *Ulocladium oudemansii* HRU3 (e.g. BOTRY-ZEN® from Botry-Zen Ltd, NZ);

- others: biphenyl, bronopol, cyflufenamid, cymoxanil, diphenylamin, metrafenone, pyriofenone, mildiomycin, oxin-copper, prohexadione-calcium, spiroxamine, tebufloquin, tolylfluanid, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yhamide, methoxy-acetic acid 6-tert-butyl-8-fluoro-2,3-dimethyl-quinolin-4-yl ester and N-Methyl-2-{1-[(5-methyl-3-trifluoromethyl-1H-pyrazol-1-yl)-acetyl]-piperidin-4-y1}-N-[(1R)-1,2,3,4-tetrahydro-naphthalen-1-yl]-4-thiazolecarboxamide.

G) growth regulators

abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

H) herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;

- amino acid derivatives: bilanafos, glyphosate, glufosinate, sulfosate;

- aryloxyphenoxypropionates: clodinafop, cyhalofop-butyl, fenoxaprop, fluazifop, haloxyfop, metamifop, propaquizafop, quizalofop, quizalofop-P-tefuryl;

- Bipyridyls: diquat, paraquat;

- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;

- cyclohexanediones: butroxydim, clethodim, cycloxydim, profoxydim, sethoxydim, tepraloxydim, tralkoxydim;

- dinitroanilines: benfluralin, ethalfluralin, oryzalin, pendimethalin, prodiamine, trifluralin;

- diphenyl ethers: acifluorfen, aclonifen, bifenox, diclofop, ethoxyfen, fomesafen, lactofen, oxyfluorfen;

- hydroxybenzonitriles: bomoxynil, dichlobenil, ioxynil;

- imidazolinones: imazamethabenz, imazamox, imazapic, imazapyr, imazaquin, imazethapyr;

- phenoxy acetic acids: clomeprop, 2,4-dichlorophenoxyacetic acid (2,4-D), 2,4-DB, dichlorprop, MCPA, MCPA-thioethyl, MCPB, Mecoprop;

- pyrazines: chloridazon, flufenpyr-ethyl, fluthiacet, norflurazon, pyridate;

- pyridines: aminopyralid, clopyralid, diflufenican, dithiopyr, fluridone, fluroxypyr, picloram, picolinafen, thiazopyr;

- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;

- triazines: ametryn, atrazine, cyanazine, dimethametryn, ethiozin, hexazinone, metamitron, metribuzin, prometryn, simazine, terbuthylazine, terbutryn, triaziflam;

- ureas: chlorotoluron, daimuron, diuron, fluometuron, isoproturon, linuron, methabenzthiazuron,tebuthiuron;

- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;

- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

I) insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;

- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;

- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfen-valerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;

- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;

- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, sulfur, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon.

A further embodiment relates to the compositions C-1 to C-4600 listed in Table C, where a row of Table C corresponds in each case to a fungicidal composition comprising as component 1 the compound of the formula I, as component 2 one individualized compound according to the Table A, and as component 3 the respective further active substance selected from the group consisting of T-1 to T-100 stated in the row in question. Preferably, the compositions described comprise the active substances in synergistically effective amounts.

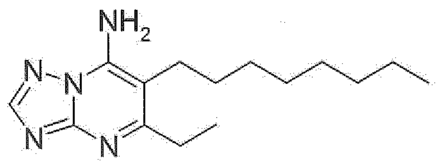
(I)

| No. | Component 3 |
|---|---|
| T-1 | Azoxystrobin |
| T-2 | Enestroburin |
| T-3 | Fluoxastrobin |
| T-4 | Kresoxim-methyl |
| T-5 | Picoxystrobin |
| T-6 | Pyraclostrobin |
| T-7 | Pyribencarb |
| T-8 | Trifloxystrobin |
| T-9 | Benalaxyl |
| T-10 | Benalaxyl-M |
| T-11 | Bixafen |

| No. | Component 3 |
|---|---|
| T-12 | Boscalid |
| T-13 | Fenhexamid |
| T-14 | Flutolanil |
| T-15 | Fluxapyroxad |
| T-16 | Isopyrazam |
| T-17 | Mepronil |
| T-18 | Metalaxyl |
| T-19 | Metalaxyl-M |
| T-20 | Penflufen |
| T-21 | Penthiopyrad |
| T-22 | Sedaxane |

| No. | Component 3 |
|---|---|
| T-23 | Dimethomorph |
| T-24 | Flumorph |
| T-25 | Pyrimorph |
| T-26 | Fluopicolide |
| T-27 | Fluopyram |
| T-28 | Zoxamide |
| T-29 | Mandipropamid |
| T-30 | Difenoconazole |
| T-31 | Epoxiconazole |
| T-32 | Fenbuconazole |
| T-33 | Fluquinconazole |
| T-34 | Flusilazole |
| T-35 | Hexaconazol |
| T-36 | Metconazole |
| T-37 | Myclobutanil |
| T-38 | Penconazole |
| T-39 | Prothioconazole |
| T-40 | Tebuconazole |
| T-41 | Tetraconazole |
| T-42 | Triadimefon |
| T-43 | Triadimenol |
| T-44 | Triticonazole |
| T-45 | Cyazofamid |
| T-46 | Imazalil |
| T-47 | Imazalil-sulfate |
| T-48 | Prochloraz |
| T-49 | Carbendazim |
| T-50 | Thiabendazole |
| T-51 | Ethaboxam |
| T-52 | Fluazinam |
| T-53 | Pyrifenox |
| T-54 | Bupirimate |
| T-55 | Cyprodinil |
| T-56 | Fenarimol |
| T-57 | Mepanipyrim |
| T-58 | Pyrimethanil |
| T-59 | Triforine |
| T-60 | Fludioxonil |
| T-61 | Iprodione |
| T-62 | Procymidone |

| No. | Component 3 |
|---|---|
| T-63 | Vinclozolin |
| T-64 | Famoxadone |
| T-65 | Fenamidone |
| T-66 | Flutianil |
| T-67 | Amisulbrom |
| T-68 | Captan |
| T-69 | Folpet |
| T-70 | Quinoxyfen |
| T-71 | Mancozeb |
| T-72 | Maneb |
| T-73 | Metiram |
| T-74 | Propineb |
| T-75 | Thiram |
| T-76 | Zineb |
| T-77 | Diethofencarb |
| T-78 | Benthiavalicarb |
| T-79 | Iprovalicarb |
| T-80 | Propamocarb |
| T-81 | Propamocarb hydrochlorid |
| T-82 | Valifenalate |
| T-83 | Validamycin A |
| T-84 | Dinocap |
| T-85 | Fentin salts |
| T-86 | Dithianon |
| T-87 | Fosetyl, Fosetyl-aluminium |
| T-88 | Tolclofos-methyl |
| T-89 | Chlorothalonil |
| T-90 | Pencycuron |
| T-91 | Quintozene |
| T-92 | Thiophanate Methyl |
| T-93 | Tolylfluanid |
| T-94 | Copper acetate |
| T-95 | Copper hydroxide |
| T-96 | Copper oxychloride |
| T-97 | basic Copper sulfate |
| T-98 | Cymoxanil |

| No. | Component 3 |
|---|---|
| T-99 | 2-{1-[2-(5-Methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide |
| T-100 | 2-{1-[2-(5-Methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide |

Table C: Composition comprising the compound of the formula I, one individualized compound according to the Table A, and the respective further active substance selected from the group consisting of T-1 to T-100.

| No. | Components | | |
|---|---|---|---|
| | 1 | 2 | 3 |
| C-1 | I | A-20 | T-1 |
| C-2 | I | A-20 | T-2 |
| C-3 | I | A-20 | T-3 |
| C-4 | I | A-20 | T-4 |
| C-5 | I | A-20 | T-5 |
| C-6 | I | A-20 | T-6 |
| C-7 | I | A-20 | T-7 |
| C-8 | I | A-20 | T-8 |
| C-9 | I | A-20 | T-9 |
| C-10 | I | A-20 | T-10 |
| C-11 | I | A-20 | T-11 |
| C-12 | I | A-20 | T-12 |
| C-13 | I | A-20 | T-13 |

| | | | |
|---|---|---|---|
| C-14 | I | A-20 | T-14 |
| C-15 | I | A-20 | T-15 |
| C-16 | I | A-20 | T-16 |
| C-17 | I | A-20 | T-17 |
| C-18 | I | A-20 | T-18 |
| C-19 | I | A-20 | T-19 |
| C-20 | I | A-20 | T-20 |
| C-21 | I | A-20 | T-21 |
| C-22 | I | A-20 | T-22 |
| C-23 | I | A-20 | T-23 |
| C-24 | I | A-20 | T-24 |
| C-25 | I | A-20 | T-25 |
| C-26 | I | A-20 | T-26 |
| C-27 | I | A-20 | T-27 |
| C-28 | I | A-20 | T-28 |
| C-29 | I | A-20 | T-29 |
| C-30 | I | A-20 | T-30 |
| C-31 | I | A-20 | T-31 |
| C-32 | I | A-20 | T-32 |
| C-33 | I | A-20 | T-33 |
| C-34 | I | A-20 | T-34 |
| C-35 | I | A-20 | T-35 |
| C-36 | I | A-20 | T-36 |
| C-37 | I | A-20 | T-37 |
| C-38 | I | A-20 | T-38 |
| C-39 | I | A-20 | T-39 |
| C-40 | I | A-20 | T-40 |
| C-41 | I | A-20 | T-41 |
| C-42 | I | A-20 | T-42 |
| C-43 | I | A-20 | T-43 |
| C-44 | I | A-20 | T-44 |
| C-45 | I | A-20 | T-45 |
| C-46 | I | A-20 | T-46 |
| C-47 | I | A-20 | T-47 |
| C-48 | I | A-20 | T-48 |
| C-49 | I | A-20 | T-49 |
| C-50 | I | A-20 | T-50 |
| C-51 | I | A-20 | T-51 |
| C-52 | I | A-20 | T-52 |
| C-53 | I | A-20 | T-53 |
| C-54 | I | A-20 | T-54 |
| C-55 | I | A-20 | T-55 |
| C-56 | I | A-20 | T-56 |
| C-57 | I | A-20 | T-57 |
| C-58 | I | A-20 | T-58 |
| C-59 | I | A-20 | T-59 |
| C-60 | I | A-20 | T-60 |
| C-61 | I | A-20 | T-61 |
| C-62 | I | A-20 | T-62 |
| C-63 | I | A-20 | T-63 |
| C-64 | I | A-20 | T-64 |
| C-65 | I | A-20 | T-65 |
| C-66 | I | A-20 | T-66 |
| C-67 | I | A-20 | T-67 |
| C-68 | I | A-20 | T-68 |
| C-69 | I | A-20 | T-69 |
| C-70 | I | A-20 | T-70 |
| C-71 | I | A-20 | T-71 |
| C-72 | I | A-20 | T-72 |
| C-73 | I | A-20 | T-73 |
| C-74 | I | A-20 | T-74 |
| C-75 | I | A-20 | T-75 |
| C-76 | I | A-20 | T-76 |
| C-77 | I | A-20 | T-77 |
| C-78 | I | A-20 | T-78 |
| C-79 | I | A-20 | T-79 |
| C-80 | I | A-20 | T-80 |
| C-81 | I | A-20 | T-81 |
| C-82 | I | A-20 | T-82 |
| C-83 | I | A-20 | T-83 |
| C-84 | I | A-20 | T-84 |
| C-85 | I | A-20 | T-85 |
| C-86 | I | A-20 | T-86 |
| C-87 | I | A-20 | T-87 |
| C-88 | I | A-20 | T-88 |
| C-89 | I | A-20 | T-89 |
| C-90 | I | A-20 | T-90 |
| C-91 | I | A-20 | T-91 |
| C-92 | I | A-20 | T-92 |
| C-93 | I | A-20 | T-93 |
| C-94 | I | A-20 | T-94 |
| C-95 | I | A-20 | T-95 |
| C-96 | I | A-20 | T-96 |
| C-97 | I | A-20 | T-97 |
| C-98 | I | A-20 | T-98 |
| C-99 | I | A-20 | T-99 |
| C-100 | I | A-20 | T-100 |

| No. | Components | | |
|---|---|---|---|
| | 1 | 2 | 3 |
| C-101 | I | A-21 | T-1 |
| C-102 | I | A-21 | T-2 |
| C-103 | I | A-21 | T-3 |
| C-104 | I | A-21 | T-4 |
| C-105 | I | A-21 | T-5 |
| C-106 | I | A-21 | T-6 |
| C-107 | I | A-21 | T-7 |
| C-108 | I | A-21 | T-8 |
| C-109 | I | A-21 | T-9 |
| C-110 | I | A-21 | T-10 |
| C-111 | I | A-21 | T-11 |
| C-112 | I | A-21 | T-12 |
| C-113 | I | A-21 | T-13 |

| | | | | | | | | | | | |
|---|---|---|---|---|---|---|---|---|---|---|---|
| C-114 | I | A-21 | T-14 | C-143 | I | A-21 | T-43 | C-172 | I | A-21 | T-72 |
| C-115 | I | A-21 | T-15 | C-144 | I | A-21 | T-44 | C-173 | I | A-21 | T-73 |
| C-116 | I | A-21 | T-16 | C-145 | I | A-21 | T-45 | C-174 | I | A-21 | T-74 |
| C-117 | I | A-21 | T-17 | C-146 | I | A-21 | T-46 | C-175 | I | A-21 | T-75 |
| C-118 | I | A-21 | T-18 | C-147 | I | A-21 | T-47 | C-176 | I | A-21 | T-76 |
| C-119 | I | A-21 | T-19 | C-148 | I | A-21 | T-48 | C-177 | I | A-21 | T-77 |
| C-120 | I | A-21 | T-20 | C-149 | I | A-21 | T-49 | C-178 | I | A-21 | T-78 |
| C-121 | I | A-21 | T-21 | C-150 | I | A-21 | T-50 | C-179 | I | A-21 | T-79 |
| C-122 | I | A-21 | T-22 | C-151 | I | A-21 | T-51 | C-180 | I | A-21 | T-80 |
| C-123 | I | A-21 | T-23 | C-152 | I | A-21 | T-52 | C-181 | I | A-21 | T-81 |
| C-124 | I | A-21 | T-24 | C-153 | I | A-21 | T-53 | C-182 | I | A-21 | T-82 |
| C-125 | I | A-21 | T-25 | C-154 | I | A-21 | T-54 | C-183 | I | A-21 | T-83 |
| C-126 | I | A-21 | T-26 | C-155 | I | A-21 | T-55 | C-184 | I | A-21 | T-84 |
| C-127 | I | A-21 | T-27 | C-156 | I | A-21 | T-56 | C-185 | I | A-21 | T-85 |
| C-128 | I | A-21 | T-28 | C-157 | I | A-21 | T-57 | C-186 | I | A-21 | T-86 |
| C-129 | I | A-21 | T-29 | C-158 | I | A-21 | T-58 | C-187 | I | A-21 | T-87 |
| C-130 | I | A-21 | T-30 | C-159 | I | A-21 | T-59 | C-188 | I | A-21 | T-88 |
| C-131 | I | A-21 | T-31 | C-160 | I | A-21 | T-60 | C-189 | I | A-21 | T-89 |
| C-132 | I | A-21 | T-32 | C-161 | I | A-21 | T-61 | C-190 | I | A-21 | T-90 |
| C-133 | I | A-21 | T-33 | C-162 | I | A-21 | T-62 | C-191 | I | A-21 | T-91 |
| C-134 | I | A-21 | T-34 | C-163 | I | A-21 | T-63 | C-192 | I | A-21 | T-92 |
| C-135 | I | A-21 | T-35 | C-164 | I | A-21 | T-64 | C-193 | I | A-21 | T-93 |
| C-136 | I | A-21 | T-36 | C-165 | I | A-21 | T-65 | C-194 | I | A-21 | T-94 |
| C-137 | I | A-21 | T-37 | C-166 | I | A-21 | T-66 | C-195 | I | A-21 | T-95 |
| C-138 | I | A-21 | T-38 | C-167 | I | A-21 | T-67 | C-196 | I | A-21 | T-96 |
| C-139 | I | A-21 | T-39 | C-168 | I | A-21 | T-68 | C-197 | I | A-21 | T-97 |
| C-140 | I | A-21 | T-40 | C-169 | I | A-21 | T-69 | C-198 | I | A-21 | T-98 |
| C-141 | I | A-21 | T-41 | C-170 | I | A-21 | T-70 | C-199 | I | A-21 | T-99 |
| C-142 | I | A-21 | T-42 | C-171 | I | A-21 | T-71 | C-200 | I | A-21 | T-100 |

| No. | Components | | | C-204 | I | A-22 | T-4 | C-209 | I | A-22 | T-9 |
|---|---|---|---|---|---|---|---|---|---|---|---|
| | 1 | 2 | 3 | C-205 | I | A-22 | T-5 | C-210 | I | A-22 | T-10 |
| C-201 | I | A-22 | T-1 | C-206 | I | A-22 | T-6 | C-211 | I | A-22 | T-11 |
| C-202 | I | A-22 | T-2 | C-207 | I | A-22 | T-7 | C-212 | I | A-22 | T-12 |
| C-203 | I | A-22 | T-3 | C-208 | I | A-22 | T-8 | C-213 | I | A-22 | T-13 |

| | | | |
|---|---|---|---|
| C-214 | I | A-22 | T-14 |
| C-215 | I | A-22 | T-15 |
| C-216 | I | A-22 | T-16 |
| C-217 | I | A-22 | T-17 |
| C-218 | I | A-22 | T-18 |
| C-219 | I | A-22 | T-19 |
| C-220 | I | A-22 | T-20 |
| C-221 | I | A-22 | T-21 |
| C-222 | I | A-22 | T-22 |
| C-223 | I | A-22 | T-23 |
| C-224 | I | A-22 | T-24 |
| C-225 | I | A-22 | T-25 |
| C-226 | I | A-22 | T-26 |
| C-227 | I | A-22 | T-27 |
| C-228 | I | A-22 | T-28 |
| C-229 | I | A-22 | T-29 |
| C-230 | I | A-22 | T-30 |
| C-231 | I | A-22 | T-31 |
| C-232 | I | A-22 | T-32 |
| C-233 | I | A-22 | T-33 |
| C-234 | I | A-22 | T-34 |
| C-235 | I | A-22 | T-35 |
| C-236 | I | A-22 | T-36 |
| C-237 | I | A-22 | T-37 |
| C-238 | I | A-22 | T-38 |
| C-239 | I | A-22 | T-39 |
| C-240 | I | A-22 | T-40 |
| C-241 | I | A-22 | T-41 |
| C-242 | I | A-22 | T-42 |
| C-243 | I | A-22 | T-43 |
| C-244 | I | A-22 | T-44 |
| C-245 | I | A-22 | T-45 |
| C-246 | I | A-22 | T-46 |
| C-247 | I | A-22 | T-47 |
| C-248 | I | A-22 | T-48 |
| C-249 | I | A-22 | T-49 |
| C-250 | I | A-22 | T-50 |
| C-251 | I | A-22 | T-51 |
| C-252 | I | A-22 | T-52 |
| C-253 | I | A-22 | T-53 |
| C-254 | I | A-22 | T-54 |
| C-255 | I | A-22 | T-55 |
| C-256 | I | A-22 | T-56 |
| C-257 | I | A-22 | T-57 |
| C-258 | I | A-22 | T-58 |
| C-259 | I | A-22 | T-59 |
| C-260 | I | A-22 | T-60 |
| C-261 | I | A-22 | T-61 |
| C-262 | I | A-22 | T-62 |
| C-263 | I | A-22 | T-63 |
| C-264 | I | A-22 | T-64 |
| C-265 | I | A-22 | T-65 |
| C-266 | I | A-22 | T-66 |
| C-267 | I | A-22 | T-67 |
| C-268 | I | A-22 | T-68 |
| C-269 | I | A-22 | T-69 |
| C-270 | I | A-22 | T-70 |
| C-271 | I | A-22 | T-71 |
| C-272 | I | A-22 | T-72 |
| C-273 | I | A-22 | T-73 |
| C-274 | I | A-22 | T-74 |
| C-275 | I | A-22 | T-75 |
| C-276 | I | A-22 | T-76 |
| C-277 | I | A-22 | T-77 |
| C-278 | I | A-22 | T-78 |
| C-279 | I | A-22 | T-79 |
| C-280 | I | A-22 | T-80 |
| C-281 | I | A-22 | T-81 |
| C-282 | I | A-22 | T-82 |
| C-283 | I | A-22 | T-83 |
| C-284 | I | A-22 | T-84 |
| C-285 | I | A-22 | T-85 |
| C-286 | I | A-22 | T-86 |
| C-287 | I | A-22 | T-87 |
| C-288 | I | A-22 | T-88 |
| C-289 | I | A-22 | T-89 |
| C-290 | I | A-22 | T-90 |
| C-291 | I | A-22 | T-91 |
| C-292 | I | A-22 | T-92 |
| C-293 | I | A-22 | T-93 |
| C-294 | I | A-22 | T-94 |
| C-295 | I | A-22 | T-95 |
| C-296 | I | A-22 | T-96 |
| C-297 | I | A-22 | T-97 |
| C-298 | I | A-22 | T-98 |
| C-299 | I | A-22 | T-99 |
| C-300 | I | A-22 | T-100 |

| No. | Components | | |
|---|---|---|---|
| | 1 | 2 | 3 |
| C-301 | I | A-23 | T-1 |
| C-302 | I | A-23 | T-2 |
| C-303 | I | A-23 | T-3 |
| C-304 | I | A-23 | T-4 |
| C-305 | I | A-23 | T-5 |
| C-306 | I | A-23 | T-6 |
| C-307 | I | A-23 | T-7 |
| C-308 | I | A-23 | T-8 |
| C-309 | I | A-23 | T-9 |
| C-310 | I | A-23 | T-10 |
| C-311 | I | A-23 | T-11 |
| C-312 | I | A-23 | T-12 |
| C-313 | I | A-23 | T-13 |

| | | | |
|---|---|---|---|
| C-314 | I | A-23 | T-14 |
| C-315 | I | A-23 | T-15 |
| C-316 | I | A-23 | T-16 |
| C-317 | I | A-23 | T-17 |
| C-318 | I | A-23 | T-18 |
| C-319 | I | A-23 | T-19 |
| C-320 | I | A-23 | T-20 |
| C-321 | I | A-23 | T-21 |
| C-322 | I | A-23 | T-22 |
| C-323 | I | A-23 | T-23 |
| C-324 | I | A-23 | T-24 |
| C-325 | I | A-23 | T-25 |
| C-326 | I | A-23 | T-26 |
| C-327 | I | A-23 | T-27 |
| C-328 | I | A-23 | T-28 |
| C-329 | I | A-23 | T-29 |
| C-330 | I | A-23 | T-30 |
| C-331 | I | A-23 | T-31 |
| C-332 | I | A-23 | T-32 |
| C-333 | I | A-23 | T-33 |
| C-334 | I | A-23 | T-34 |
| C-335 | I | A-23 | T-35 |
| C-336 | I | A-23 | T-36 |
| C-337 | I | A-23 | T-37 |
| C-338 | I | A-23 | T-38 |
| C-339 | I | A-23 | T-39 |
| C-340 | I | A-23 | T-40 |
| C-341 | I | A-23 | T-41 |
| C-342 | I | A-23 | T-42 |
| C-343 | I | A-23 | T-43 |
| C-344 | I | A-23 | T-44 |
| C-345 | I | A-23 | T-45 |
| C-346 | I | A-23 | T-46 |
| C-347 | I | A-23 | T-47 |
| C-348 | I | A-23 | T-48 |
| C-349 | I | A-23 | T-49 |
| C-350 | I | A-23 | T-50 |
| C-351 | I | A-23 | T-51 |
| C-352 | I | A-23 | T-52 |
| C-353 | I | A-23 | T-53 |
| C-354 | I | A-23 | T-54 |
| C-355 | I | A-23 | T-55 |
| C-356 | I | A-23 | T-56 |
| C-357 | I | A-23 | T-57 |
| C-358 | I | A-23 | T-58 |
| C-359 | I | A-23 | T-59 |
| C-360 | I | A-23 | T-60 |
| C-361 | I | A-23 | T-61 |
| C-362 | I | A-23 | T-62 |
| C-363 | I | A-23 | T-63 |
| C-364 | I | A-23 | T-64 |
| C-365 | I | A-23 | T-65 |
| C-366 | I | A-23 | T-66 |
| C-367 | I | A-23 | T-67 |
| C-368 | I | A-23 | T-68 |
| C-369 | I | A-23 | T-69 |
| C-370 | I | A-23 | T-70 |
| C-371 | I | A-23 | T-71 |
| C-372 | I | A-23 | T-72 |
| C-373 | I | A-23 | T-73 |
| C-374 | I | A-23 | T-74 |
| C-375 | I | A-23 | T-75 |
| C-376 | I | A-23 | T-76 |
| C-377 | I | A-23 | T-77 |
| C-378 | I | A-23 | T-78 |
| C-379 | I | A-23 | T-79 |
| C-380 | I | A-23 | T-80 |
| C-381 | I | A-23 | T-81 |
| C-382 | I | A-23 | T-82 |
| C-383 | I | A-23 | T-83 |
| C-384 | I | A-23 | T-84 |
| C-385 | I | A-23 | T-85 |
| C-386 | I | A-23 | T-86 |
| C-387 | I | A-23 | T-87 |
| C-388 | I | A-23 | T-88 |
| C-389 | I | A-23 | T-89 |
| C-390 | I | A-23 | T-90 |
| C-391 | I | A-23 | T-91 |
| C-392 | I | A-23 | T-92 |
| C-393 | I | A-23 | T-93 |
| C-394 | I | A-23 | T-94 |
| C-395 | I | A-23 | T-95 |
| C-396 | I | A-23 | T-96 |
| C-397 | I | A-23 | T-97 |
| C-398 | I | A-23 | T-98 |
| C-399 | I | A-23 | T-99 |
| C-400 | I | A-23 | T-100 |

| No. | Components | | |
|---|---|---|---|
| | 1 | 2 | 3 |
| C-401 | I | A-24 | T-1 |
| C-402 | I | A-24 | T-2 |
| C-403 | I | A-24 | T-3 |
| C-404 | I | A-24 | T-4 |
| C-405 | I | A-24 | T-5 |
| C-406 | I | A-24 | T-6 |
| C-407 | I | A-24 | T-7 |
| C-408 | I | A-24 | T-8 |
| C-409 | I | A-24 | T-9 |
| C-410 | I | A-24 | T-10 |
| C-411 | I | A-24 | T-11 |
| C-412 | I | A-24 | T-12 |
| C-413 | I | A-24 | T-13 |

| | | | | | | | | | | | |
|---|---|---|---|---|---|---|---|---|---|---|---|
| C-414 | I | A-24 | T-14 | C-443 | I | A-24 | T-43 | C-472 | I | A-24 | T-72 |
| C-415 | I | A-24 | T-15 | C-444 | I | A-24 | T-44 | C-473 | I | A-24 | T-73 |
| C-416 | I | A-24 | T-16 | C-445 | I | A-24 | T-45 | C-474 | I | A-24 | T-74 |
| C-417 | I | A-24 | T-17 | C-446 | I | A-24 | T-46 | C-475 | I | A-24 | T-75 |
| C-418 | I | A-24 | T-18 | C-447 | I | A-24 | T-47 | C-476 | I | A-24 | T-76 |
| C-419 | I | A-24 | T-19 | C-448 | I | A-24 | T-48 | C-477 | I | A-24 | T-77 |
| C-420 | I | A-24 | T-20 | C-449 | I | A-24 | T-49 | C-478 | I | A-24 | T-78 |
| C-421 | I | A-24 | T-21 | C-450 | I | A-24 | T-50 | C-479 | I | A-24 | T-79 |
| C-422 | I | A-24 | T-22 | C-451 | I | A-24 | T-51 | C-480 | I | A-24 | T-80 |
| C-423 | I | A-24 | T-23 | C-452 | I | A-24 | T-52 | C-481 | I | A-24 | T-81 |
| C-424 | I | A-24 | T-24 | C-453 | I | A-24 | T-53 | C-482 | I | A-24 | T-82 |
| C-425 | I | A-24 | T-25 | C-454 | I | A-24 | T-54 | C-483 | I | A-24 | T-83 |
| C-426 | I | A-24 | T-26 | C-455 | I | A-24 | T-55 | C-484 | I | A-24 | T-84 |
| C-427 | I | A-24 | T-27 | C-456 | I | A-24 | T-56 | C-485 | I | A-24 | T-85 |
| C-428 | I | A-24 | T-28 | C-457 | I | A-24 | T-57 | C-486 | I | A-24 | T-86 |
| C-429 | I | A-24 | T-29 | C-458 | I | A-24 | T-58 | C-487 | I | A-24 | T-87 |
| C-430 | I | A-24 | T-30 | C-459 | I | A-24 | T-59 | C-488 | I | A-24 | T-88 |
| C-431 | I | A-24 | T-31 | C-460 | I | A-24 | T-60 | C-489 | I | A-24 | T-89 |
| C-432 | I | A-24 | T-32 | C-461 | I | A-24 | T-61 | C-490 | I | A-24 | T-90 |
| C-433 | I | A-24 | T-33 | C-462 | I | A-24 | T-62 | C-491 | I | A-24 | T-91 |
| C-434 | I | A-24 | T-34 | C-463 | I | A-24 | T-63 | C-492 | I | A-24 | T-92 |
| C-435 | I | A-24 | T-35 | C-464 | I | A-24 | T-64 | C-493 | I | A-24 | T-93 |
| C-436 | I | A-24 | T-36 | C-465 | I | A-24 | T-65 | C-494 | I | A-24 | T-94 |
| C-437 | I | A-24 | T-37 | C-466 | I | A-24 | T-66 | C-495 | I | A-24 | T-95 |
| C-438 | I | A-24 | T-38 | C-467 | I | A-24 | T-67 | C-496 | I | A-24 | T-96 |
| C-439 | I | A-24 | T-39 | C-468 | I | A-24 | T-68 | C-497 | I | A-24 | T-97 |
| C-440 | I | A-24 | T-40 | C-469 | I | A-24 | T-69 | C-498 | I | A-24 | T-98 |
| C-441 | I | A-24 | T-41 | C-470 | I | A-24 | T-70 | C-499 | I | A-24 | T-99 |
| C-442 | I | A-24 | T-42 | C-471 | I | A-24 | T-71 | C-500 | I | A-24 | T-100 |

| No. | Components | | | | | | | | | | |
|---|---|---|---|---|---|---|---|---|---|---|---|
| | 1 | 2 | 3 | C-504 | I | A-25 | T-4 | C-509 | I | A-25 | T-9 |
| | | | | C-505 | I | A-25 | T-5 | C-510 | I | A-25 | T-10 |
| C-501 | I | A-25 | T-1 | C-506 | I | A-25 | T-6 | C-511 | I | A-25 | T-11 |
| C-502 | I | A-25 | T-2 | C-507 | I | A-25 | T-7 | C-512 | I | A-25 | T-12 |
| C-503 | I | A-25 | T-3 | C-508 | I | A-25 | T-8 | C-513 | I | A-25 | T-13 |

| | | | |
|---|---|---|---|
| C-514 | I | A-25 | T-14 |
| C-515 | I | A-25 | T-15 |
| C-516 | I | A-25 | T-16 |
| C-517 | I | A-25 | T-17 |
| C-518 | I | A-25 | T-18 |
| C-519 | I | A-25 | T-19 |
| C-520 | I | A-25 | T-20 |
| C-521 | I | A-25 | T-21 |
| C-522 | I | A-25 | T-22 |
| C-523 | I | A-25 | T-23 |
| C-524 | I | A-25 | T-24 |
| C-525 | I | A-25 | T-25 |
| C-526 | I | A-25 | T-26 |
| C-527 | I | A-25 | T-27 |
| C-528 | I | A-25 | T-28 |
| C-529 | I | A-25 | T-29 |
| C-530 | I | A-25 | T-30 |
| C-531 | I | A-25 | T-31 |
| C-532 | I | A-25 | T-32 |
| C-533 | I | A-25 | T-33 |
| C-534 | I | A-25 | T-34 |
| C-535 | I | A-25 | T-35 |
| C-536 | I | A-25 | T-36 |
| C-537 | I | A-25 | T-37 |
| C-538 | I | A-25 | T-38 |
| C-539 | I | A-25 | T-39 |
| C-540 | I | A-25 | T-40 |
| C-541 | I | A-25 | T-41 |
| C-542 | I | A-25 | T-42 |
| C-543 | I | A-25 | T-43 |
| C-544 | I | A-25 | T-44 |
| C-545 | I | A-25 | T-45 |
| C-546 | I | A-25 | T-46 |
| C-547 | I | A-25 | T-47 |
| C-548 | I | A-25 | T-48 |
| C-549 | I | A-25 | T-49 |
| C-550 | I | A-25 | T-50 |
| C-551 | I | A-25 | T-51 |
| C-552 | I | A-25 | T-52 |
| C-553 | I | A-25 | T-53 |
| C-554 | I | A-25 | T-54 |
| C-555 | I | A-25 | T-55 |
| C-556 | I | A-25 | T-56 |
| C-557 | I | A-25 | T-57 |
| C-558 | I | A-25 | T-58 |
| C-559 | I | A-25 | T-59 |
| C-560 | I | A-25 | T-60 |
| C-561 | I | A-25 | T-61 |
| C-562 | I | A-25 | T-62 |
| C-563 | I | A-25 | T-63 |
| C-564 | I | A-25 | T-64 |
| C-565 | I | A-25 | T-65 |
| C-566 | I | A-25 | T-66 |
| C-567 | I | A-25 | T-67 |
| C-568 | I | A-25 | T-68 |
| C-569 | I | A-25 | T-69 |
| C-570 | I | A-25 | T-70 |
| C-571 | I | A-25 | T-71 |
| C-572 | I | A-25 | T-72 |
| C-573 | I | A-25 | T-73 |
| C-574 | I | A-25 | T-74 |
| C-575 | I | A-25 | T-75 |
| C-576 | I | A-25 | T-76 |
| C-577 | I | A-25 | T-77 |
| C-578 | I | A-25 | T-78 |
| C-579 | I | A-25 | T-79 |
| C-580 | I | A-25 | T-80 |
| C-581 | I | A-25 | T-81 |
| C-582 | I | A-25 | T-82 |
| C-583 | I | A-25 | T-83 |
| C-584 | I | A-25 | T-84 |
| C-585 | I | A-25 | T-85 |
| C-586 | I | A-25 | T-86 |
| C-587 | I | A-25 | T-87 |
| C-588 | I | A-25 | T-88 |
| C-589 | I | A-25 | T-89 |
| C-590 | I | A-25 | T-90 |
| C-591 | I | A-25 | T-91 |
| C-592 | I | A-25 | T-92 |
| C-593 | I | A-25 | T-93 |
| C-594 | I | A-25 | T-94 |
| C-595 | I | A-25 | T-95 |
| C-596 | I | A-25 | T-96 |
| C-597 | I | A-25 | T-97 |
| C-598 | I | A-25 | T-98 |
| C-599 | I | A-25 | T-99 |
| C-600 | I | A-25 | T-100 |

| No. | Components | | |
|---|---|---|---|
| | 1 | 2 | 3 |
| C-601 | I | A-32 | T-1 |
| C-602 | I | A-32 | T-2 |
| C-603 | I | A-32 | T-3 |
| C-604 | I | A-32 | T-4 |
| C-605 | I | A-32 | T-5 |
| C-606 | I | A-32 | T-6 |
| C-607 | I | A-32 | T-7 |
| C-608 | I | A-32 | T-8 |
| C-609 | I | A-32 | T-9 |
| C-610 | I | A-32 | T-10 |
| C-611 | I | A-32 | T-11 |
| C-612 | I | A-32 | T-12 |
| C-613 | I | A-32 | T-13 |

| | | | | | | | | | | | |
|---|---|---|---|---|---|---|---|---|---|---|---|
| C-614 | I | A-32 | T-14 | C-643 | I | A-32 | T-43 | C-672 | I | A-32 | T-72 |
| C-615 | I | A-32 | T-15 | C-644 | I | A-32 | T-44 | C-673 | I | A-32 | T-73 |
| C-616 | I | A-32 | T-16 | C-645 | I | A-32 | T-45 | C-674 | I | A-32 | T-74 |
| C-617 | I | A-32 | T-17 | C-646 | I | A-32 | T-46 | C-675 | I | A-32 | T-75 |
| C-618 | I | A-32 | T-18 | C-647 | I | A-32 | T-47 | C-676 | I | A-32 | T-76 |
| C-619 | I | A-32 | T-19 | C-648 | I | A-32 | T-48 | C-677 | I | A-32 | T-77 |
| C-620 | I | A-32 | T-20 | C-649 | I | A-32 | T-49 | C-678 | I | A-32 | T-78 |
| C-621 | I | A-32 | T-21 | C-650 | I | A-32 | T-50 | C-679 | I | A-32 | T-79 |
| C-622 | I | A-32 | T-22 | C-651 | I | A-32 | T-51 | C-680 | I | A-32 | T-80 |
| C-623 | I | A-32 | T-23 | C-652 | I | A-32 | T-52 | C-681 | I | A-32 | T-81 |
| C-624 | I | A-32 | T-24 | C-653 | I | A-32 | T-53 | C-682 | I | A-32 | T-82 |
| C-625 | I | A-32 | T-25 | C-654 | I | A-32 | T-54 | C-683 | I | A-32 | T-83 |
| C-626 | I | A-32 | T-26 | C-655 | I | A-32 | T-55 | C-684 | I | A-32 | T-84 |
| C-627 | I | A-32 | T-27 | C-656 | I | A-32 | T-56 | C-685 | I | A-32 | T-85 |
| C-628 | I | A-32 | T-28 | C-657 | I | A-32 | T-57 | C-686 | I | A-32 | T-86 |
| C-629 | I | A-32 | T-29 | C-658 | I | A-32 | T-58 | C-687 | I | A-32 | T-87 |
| C-630 | I | A-32 | T-30 | C-659 | I | A-32 | T-59 | C-688 | I | A-32 | T-88 |
| C-631 | I | A-32 | T-31 | C-660 | I | A-32 | T-60 | C-689 | I | A-32 | T-89 |
| C-632 | I | A-32 | T-32 | C-661 | I | A-32 | T-61 | C-690 | I | A-32 | T-90 |
| C-633 | I | A-32 | T-33 | C-662 | I | A-32 | T-62 | C-691 | I | A-32 | T-91 |
| C-634 | I | A-32 | T-34 | C-663 | I | A-32 | T-63 | C-692 | I | A-32 | T-92 |
| C-635 | I | A-32 | T-35 | C-664 | I | A-32 | T-64 | C-693 | I | A-32 | T-93 |
| C-636 | I | A-32 | T-36 | C-665 | I | A-32 | T-65 | C-694 | I | A-32 | T-94 |
| C-637 | I | A-32 | T-37 | C-666 | I | A-32 | T-66 | C-695 | I | A-32 | T-95 |
| C-638 | I | A-32 | T-38 | C-667 | I | A-32 | T-67 | C-696 | I | A-32 | T-96 |
| C-639 | I | A-32 | T-39 | C-668 | I | A-32 | T-68 | C-697 | I | A-32 | T-97 |
| C-640 | I | A-32 | T-40 | C-669 | I | A-32 | T-69 | C-698 | I | A-32 | T-98 |
| C-641 | I | A-32 | T-41 | C-670 | I | A-32 | T-70 | C-699 | I | A-32 | T-99 |
| C-642 | I | A-32 | T-42 | C-671 | I | A-32 | T-71 | C-700 | I | A-32 | T-100 |

In binary mixtures, i.e. mixtures according to the invention comprising the compound of the formula I (component 1) and one further active compound of the formula IIA (component 2), e. g. one active substance from Table A, the weight ratio of component 1 and component 2 generally depends from the properties of the active substances used, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:3 to 3:1.

In ternary mixtures, i.e. compositions according to the invention comprising one compound of the formula I (component 1) and a first further active compound of the formula IIA (component 2) and a second further active compound

(component 3), e. g. an active substance from T-1 to T-100 as defined above, the weight ratio of component 1 and component 2 depends from the properties of the active substances used, preferably it is in the range of from 1:50 to 50:1 and particularly in the range of from 1:10 to 10:1, and the weight ratio of component 1 and component 3 preferably is in the range of from 1:50 to 50:1 and particularly in the range of from 1:10 to 10:1.

The invention also relates to agrochemical compositions comprising a solvent or solid carrier and the inventive fungicidal mixtures. The agrochemical composition comprises a fungicidally effective amount of a compound of the formula I and at least one compound of the formula IIA.

The term "effective amount" denotes an amount of the composition or of the compound of the formula I and at least one compound of the formula IIA. which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific mixture used.

The inventive mixtures can be converted into customary types of agrochemical compositions, e. g. solutions, emulsions, suspensions, dusts, powders, pastes and granules. The composition type depends on the particular intended purpose; in each case, it should ensure a fine and uniform distribution of the compound according to the invention.

Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be watersoluble or wettable, as well as gel formulations for the treatment of plant propagation materials such as seeds (GF).

Usually the composition types (e. g. SC, OD, FS, EC, WG, SG, WP, SP, SS, WS, GF) are employed diluted. Composition types such as DP, DS, GR, FG, GG and MG are usually used undiluted.

The compositions are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical compositions may also comprise auxiliaries which are customary in agrochemical compositions. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wtters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol® types, Clariant, Switzerland), polycarboxylates (Sokolan® types, BASF, Germany), polyalkoxylates, polyvinyl-amines (Lupasol® types, BASF, Germany), polyvinylpyrrolidone and the copolymers therof.

Examples for thickeners (i. e. compounds that impart a modified flowability to compositions, i. e. high viscosity under static conditions and low viscosity during agitation) are polysaccharides and organic and anorganic clays such

as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the composition. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie).

Examples for suitable anti-freezing agents are ethylene glycol, propylene glycol, urea and glycerin.

Examples for anti-foaming agents are silicone emulsions (such as e. g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the fungicidal mixture and, if appropriate, further active substances, with at least one solid carrier.

Granules, e. g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e. g., ammonium sulfate, ammonium phosphate, ammonium nitrate, ureas, and products of vegetable origin, such as cereal meal, tree bark meal, wood meal and nutshell meal, cellulose powders and other solid carriers.

Examples for composition types are:

1. Composition types for dilution with water

   i) Water-soluble concentrates (SL, LS)
   10 parts by weight of a composition according to the invention are dissolved in 90 parts by weight of water or in a water-soluble solvent. As an alternative, wetting agents or other auxiliaries are added. The active substance dissolves upon dilution with water. In this way, a composition having a content of 10% by weight of active substance is obtained.

   ii) Dispersible concentrates (DC)
   20 parts by weight of a composition according to the invention are dissolved in 70 parts by weight of cyclohexanone with addition of 10 parts by weight of a dispersant, e. g. polyvinylpyrrolidone. Dilution with water gives a dispersion. The active substance content is 20% by weight.

   iii) Emulsifiable concentrates (EC)
   15 parts by weight of a composition according to the invention are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

   iv) Emulsions (EW, EO, ES)
   25 parts by weight of a composition according to the invention are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substance content of 25% by weight.

   v) Suspensions (SC, OD, FS)
   In an agitated ball mill, 20 parts by weight of a composition according to the invention are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.

   vi) Water-dispersible granules and water-soluble granules (WG, SG)
   50 parts by weight of a composition according to the invention are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion

or solution of the active substance. The composition has an active substance content of 50% by weight.

vii) Water-dispersible powders and water-soluble powders (WP, SP, SS, WS)

75 parts by weight of a compound a composition according to the invention are ground in a rotor-stator mill with addition of 25 parts by weight of dispersants, wetting agents and silica gel. Dilution with water gives a stable dispersion or solution of the active substance. The active substance content of the composition is 75% by weight.

viii) Gel (GF)

In an agitated ball mill, 20 parts by weight of a composition according to the invention are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix) Dustable powders (DP, DS)

5 parts by weight of a composition according to the invention are ground finely and mixed intimately with 95 parts by weight of finely divided kaolin. This gives a dustable composition having an active substance content of 5% by weight.

x) Granules (GR, FG, GG, MG)

0.5 parts by weight of a composition according to the invention is ground finely and associated with 99.5 parts by weight of carriers. Current methods are extrusion, spray-drying or the fluidized bed. This gives granules to be applied undiluted having an active substance content of 0.5% by weight.

xi) ULV solutions (UL)

10 parts by weight of a composition according to the invention are dissolved in 90 parts by weight of an organic solvent, e. g. xylene. This gives a composition to be applied undiluted having an active substance content of 10% by weight.

The agrochemical compositions generally comprise between 0.01 and 95%, preferably between 0.1 and 90%, most preferably between 0.5 and 90%, by weight of active substance. The active substances are employed in a purity of from 90% to 100%, preferably from 95% to 100% (according to NMR spectrum).

Water-soluble concentrates (LS), flowable concentrates (FS), powders for dry treatment (DS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting, soaking and in-furrow application methods of the propagation material. In a preferred embodiment, the compounds or the compositions thereof, respectively, are applied on to the plant propagation material by a method such that germination is not induced, e. g. by seed dressing, pelleting, coating and dusting.

In a preferred embodiment, a suspension-type (FS) composition is used for seed treatment. Typcially, a FS composition may comprise 1-800 g/l of active substance, 1-200 g/l Surfactant, 0 to 200 g/l antifreezing agent, 0 to 400 g/l of binder, 0 to 200 g/l of a pigment and up to 1 liter of a solvent, preferably water.

The active substances can be used as such or in the form of their compositions, e. g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the active substances according to the invention.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of active substance.

The active substances may also be used successfully in the ultra-low-volume process (ULV), it being possible to apply compositions comprising over 95% by weight of active substance, or even to apply the active substance without

additives.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required. When used in the protection of materials or stored products, the amount of active substance applied depends on the kind of application area and on the desired effect. Amounts customarily applied in the protection of materials are, e. g., 0.001 g to 2 kg, preferably 0.005 g to 1 kg, of active substance per cubic meter of treated material. Various types of oils, wetters, adjuvants, herbicides, bactericides, other fungicides and/or pesticides may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

Adjuvants which can be used are in particular organic modified polysiloxanes such as Break Thru S 240®; alcohol alkoxylates such as Atplus 245®, Atplus MBA 1303®, Plurafac LF 300® and Lutensol ON 30®; EO/PO block polymers, e. g. Pluronic RPE 2035® and Genapol B®; alcohol ethoxylates such as Lutensol XP 80®: and dioctyl sulfosuccinate sodium such as Leophen RA®.

According to this invention, applying the compounds of the formula I together with at least compound of the formula IIA is to be understood to denote, that at least one compound of the formula I and at least one compound of the formula IIA occur simultaneously at the site of action (i.e. the harmful fungi to be controlled or their habitats such as infected plants, plant propagation materials, particularly seeds, surfaces, materials or the soil as well as plants, plant propagation materials, particularly seeds, soil, surfaces, materials or rooms to be protected from fungal attack) in a fungicidally effective amount. This can be obtained by applying the compounds of the formula I and at least one compound of the formula IIA simultaneously, either jointly (e. g. as tank-mix) or separately, or in succession, wherein the time interval between the individual applications is selected to ensure that the active substance applied first still occurs at the site of action in a sufficient amount at the time of application of the further active substance(s). The order of application is not essential for working of the present invention. The same proceeding does apply to the ternary mixtures.

The components can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare a subject agrochemical composition. E. g., kits may include one or more fungicide component(s) and/or an adjuvant component and/or a insecticide component and/or a growth regulator component and/or a herbicde. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 100 to 400 liters.

According to one embodiment, individual components of the composition according to the invention such as parts of a kit or parts of a binary or ternary mixture may be mixed by the user himself in a spray tank and further auxiliaries may be added, if appropriate (tank mix).

In a further embodiment, either individual components of the composition according to the invention or partially premixed components may be mixed by the user in a spray tank and further auxiliaries and additives may be added, if appropriate (tank mix).

In a further embodiment, either individual components of the composition according to the invention or partially premixed components can be applied jointly (e..g. after tankmix) or consecutively.

The fungicidal mixtures and the compositions according to the invention, respectively, are suitable as fungicides. Therefore, the present invention relates to a method for controlling phytopathogenic harmful fungi, comprising treating the fungi, their habitat or the seed, the soil or the plants to be protected against fungal attack with an effective amount of the inventive mixture the composition.

They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The fungicidal mixtures and the compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

Preferably, fungicidal mixtures and compositions thereof, respectively are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the fungicidal mixtures and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as auxin herbicides such as dicamba or 2,4-D; bleacher herbicides such as hydroxylphenylpyruvate dioxygenase (HPPD) inhibitors or phytoene desaturase (PDS) inhibittors; acetolactate synthase (ALS) inhibitors such as sulfonyl ureas or imidazolinones; enolpyruvylshikimate-3-phosphate synthase (EPSPS) inhibitors, such as glyphosate; glutamine synthetase (GS) inhibitors such as glufosinate; protoporphyrinogen-IX oxidase inhibitors; lipid biosynthesis inhibitors such as acetyl CoA carboxylase (ACCase) inhibitors; or oxynil (i. e. bromoxynil or ioxynil) herbicides as a result of conventional methods of breeding or genetic engineering. Furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxin herbicides, or ACCase inhibitors. These herbicide resistance technologies are e. g. described in Pest Managem. Sci. 61, 2005, 246; 61, 2005, 258; 61, 2005, 277; 61, 2005, 269; 61, 2005, 286; 64, 2008, 326; 64, 2008, 332; Weed Sci. 57, 2009, 108; Austral. J. Agricult. Res. 58, 2007, 708; Science 316, 2007, 1185; and references quoted therein. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox, or ExpressSun® sunflowers (DuPont, USA) being tolerant to sulfonyl ureas, e. g. tribenuron. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.), Cultivance® (imidazolinone tolerant, BASF SE, Germany) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus*, particularly from *Bacillus thuringiensis,* such as δ-endotoxins, e. g. CryIA(b), CryIA(c), CryIF, CryIF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g. in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The fungicidal mixtures and compositions thereof, respectively, are particularly suitable for controlling the following plant diseases:

*Albugo* spp. (white rust) on ornamentals, vegetables (e. g. *A, candida*) and sunflowers (e. g. *A. tragopogonis*); *Alternaria* spp. (Alternaria leaf spot) on vegetables, rape (*A. brassicola* or *brassicae*), sugar beets (*A. tenuis*), fruits, rice, soybeans, potatoes (e. g. *A. solani or A. alternata*), tomatoes (e. g. *A. solani or A. alternata*) and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight (*D. maydis*) or Northern leaf blight (*B. zeicola*) on corn, e. g. spot blotch (*B. sorokiniana*) on cereals and e.g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e.g. Gray leaf spot: *C. zeae-maydis),* rice, sugar beets (e. g. *C. beticola*)*,* sugar cane, vegetables, coffee, soybeans (e. g. *C. sojina* or *C. kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes:* black dot), beans (e. g. *C. lindemuthianum*) and soybeans (e. g. *C. truncatum* or *C. gloeosporioides*); *Corticium* spp., e. g. *C. sasakii* (*sheath* blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri,* teleomorph: *Neonectria liriodendri.* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis*: tan spot), rice and turf; Esca (dieback, apoplexy) on vines, caused by *Formitiporia* (syn. *Phellinus) punctata, F. mediterranea, Phaeomoniella chlamydospora* (earlier *Phaeo-acremonium chlamydosporum), Phaeoacremonium aleophilum* and/or *Batryosphaeria obtusa; Elsinoe* spp. on pome fruits (*E. pyri*), soft fruits (*E. veneta*: anthracnose) and vines (*E ampelina*: anthracnose); *Entyloma oryzae* (leaf smut) on rice; *Epicoccum* spp. (black mold) on wheat; *Erysiphe* spp. (powdery mildew) on sugar beets (*E. betae*), vegetables (e. g. *E. pisi),* such as cucurbits (e. g. *E. cichoracearum),* cabbages, rape (e. g. *E. cruciferarum); Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani on* soybeans and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G. fujikuroi*: Bakanae disease); *Glomerella cingulata on* vines, pome fruits and other plants and *G. gossypii* on cotton; Grain-staining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix*(coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica*); *Phakopsora pachyrhiziand P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli*, teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans*: late blight) and broad-leaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae)* and thereby transmitted viral diseases; *Pseudocercosporella herpatrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili on* hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P.*

*asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea*, rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer*(black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or S. *sclerotiorum*); *Septoria* spp. on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) n*ecator(powdery* mildew, anamorph: *Odium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana*: head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago spp.* (loose smut) on cereals (e. g. *U. nuda* and *U. avaenae*), corn (e. g. *U. maydis*: corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The fungicidal mixtures and compositions thereof, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans*, *Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucor* spp., and in addition in the protection of stored products and harvest the following yeast fungi are worthy of note: *Candida* spp. and *Saccharomyces cerevisae.*

The fungicidal mixtures and compositions thereof, respectively, may be used for improving the health of a plant. The invention also relates to a method for improving plant health by treating a plant, its propagation material and/or the locus where the plant is growing or is to grow with an effective amount of the fungicidal mixtures and compositions thereof, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress. The above identified indicators for the health condition of a plant may be interdependent or may result from each other.

The components can be present in different crystal modifications whose biological activity may differ. They are likewise subject matter of the present invention.

The components are employed as such or in form of compositions by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with the fungicidal mixture as such or the composition prophylactically either at or before planting or transplanting.

The fungicidal action of the mixtures according to the invention can be shown by the tests described below.

The active compounds were separately or jointly prepared as a stock solution comprising 25 mg of active compound which was made up to 10 ml using a mixture of acetone and/or DMSO and the emulsifier Uniperol® EL (wetting agent having emulsifying and dispersing action based on ethoxylated alkylphenols) in a volume ratio of solvent/emulsifier of 99 to 1. The mixture was then made up with water to 100 ml. This stock solution was diluted with the solvent/emulsifier/water mixture described to the concentration of active compound stated below.

The visually determined percentages of infected leaf areas were converted into efficacies in % of the untreated control:

The efficacy (E) is calculated as follows using Abbot's formula:

$$E = (1 - \alpha/\beta) \cdot 100$$

$\alpha$ corresponds to the fungicidal infection of the treated plants in % and
$\beta$ corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations were determined using Colby's formula (Colby, S.R. "Calculating synergistic and antagonistic responses of herbicide combinations", Weeds, 15, 20-22, 1967) and compared with the observed efficacies.
Colby's formula:

$$E = x + y - x \cdot y/100$$

E expected efficacy, expressed in % of the untreated control, when using the mixture of the active compounds A and B at the concentrations a and b
x efficacy, expressed in % of the untreated control, when using the active compound A at the concentration a
y efficacy, expressed in % of the untreated control, when using the active compound B at the concentration b

## Claims

**1.** A fungicidal mixture comprising, as active components:

1) azolopyrimidinylamine of the formula I,

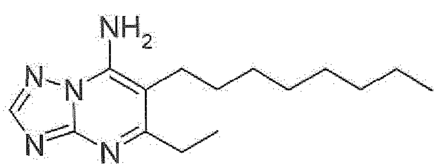
I

and
2) at least one tetrazolyloxime derivative of the formula IIA

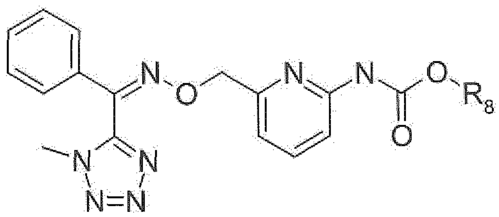
(IIA)

in which

$R^8$ is branched or unbranched $C_1$-$C_8$-alkyl;

in a synergistically effective amount.

**2.** The fungicidal mixture according to claim 1, comprising a compound of the formula I and a compound IIA in a weight ratio of from 100:1 to 1:100.

**3.** A fungicidal mixture according to any of claims 1 to 2, comprising a further active compound.

**4.** An agrochemical composition, comprising a liquid or solid carrier and a mixture according to any of claims 1 to 3.

**5.** Seed, comprising a mixture according to any of claims 1 to 3 or a composition according to claim 4 in an amount of from 1 to 1000 g/100 kg of seed.

**6.** A method for controlling phytopathogenic harmful fungi, comprising treating the fungi, their habitat or the seed, the soil or the plants to be protected against fungal attack with an effective amount of a mixture as defined in one of claims 1 to 3 or the composition as defined in claim 4.

**7.** A method for improving plant health, comprising treating a plant, its propagation material, locus where the plant is growing or is to grow with an effective amount of the mixture as defined in any one of claims 1 to 3 or the composition as defined in claim 4.

**Patentansprüche**

**1.** Fungizide Mischung, umfassend, als aktive Komponenten:

1) das Azolopyrimidinylamin der Formel I

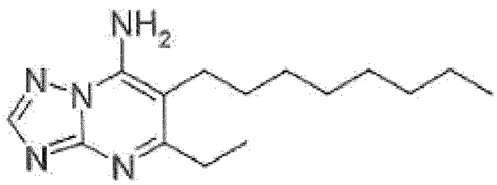

I

und
2) mindestens ein Tetrazolyloximderivat der Formel IIA

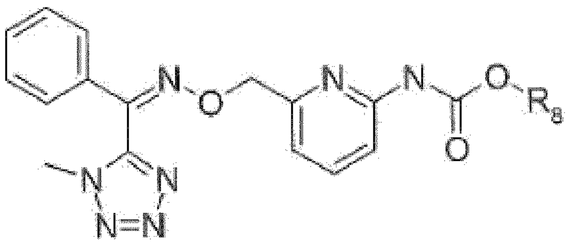

(IIA)

,

in welcher
$R^8$ für verzweigtes oder geradkettiges $C_1$-$C_8$-Alkyl steht;
in einer synergistisch wirksamen Menge.

**2.** Fungizide Mischung nach Anspruch 1, umfassend eine Verbindung der Formel I und eine Verbindung IIA in einem

Gewichtsverhältnis von 100:1 bis 1:100.

3. Fungizide Mischung nach Anspruch 1 oder 2, umfassend einen weiteren Wirkstoff.

4. Agrochemische Zusammensetzung, umfassend einen flüssigen oder festen Träger und eine Mischung nach einem der Ansprüche 1 bis 3.

5. Saatgut, umfassend eine Mischung nach einem der Ansprüche 1 bis 3 oder eine Zusammensetzung nach Anspruch 4 in einer Menge von 1-1000 g/100 kg Saatgut.

6. Verfahren zur Bekämpfung phytopathogener Schadpilze, bei dem man die Pilze, ihren Lebensraum oder das gegen Pilzbefall zu schützende Saatgut, den gegen Pilzbefall zu schützenden Boden oder die gegen Pilzbefall zu schützenden Pflanzen mit einer wirksamen Menge einer wie in einem der Ansprüche 1 bis 3 definierten Mischung oder der wie in Anspruch 4 definierten Zusammensetzung behandelt.

7. Verfahren zur Verbesserung der Pflanzengesundheit, bei dem man eine Pflanze, ihr Fortpflanzungsmaterial, den Standort, an dem die Pflanze wächst oder wachsen soll, mit einer wirksamen Menge der wie in einem der Ansprüche 1 bis 3 definierten Mischung oder der wie in Anspruch 4 definierten Zusammensetzung behandelt.

**Revendications**

1. Mélange fongicide comprenant, comme composants actifs

1) une azolopyrimidinylamine de formule I

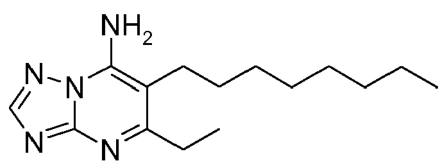

I

et
2) au moins un dérivé de tétrazolyloxime de formule IIA

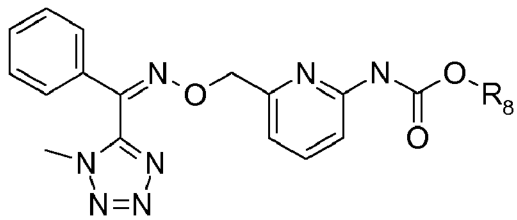

(IIA)

dans laquelle
$R^8$ est $C_1$-$C_8$alkyle ramifié ou non ramifié ;
selon une quantité efficace sur le plan synergique.

2. Mélange fongicide selon la revendication 1, comprenant un composé de formule I et un composé de formule IIA selon un rapport pondéral allant de 100:1 à 1:100.

3. Mélange fongicide selon l'une quelconque des revendications 1 à 2, comprenant un autre composé actif.

4. Composition agrochimique, comprenant un véhicule liquide ou solide et un mélange selon l'une quelconque des revendications 1 à 3.

5. Semence, comprenant un mélange selon l'une quelconque des revendications 1 à 3 ou une composition selon la

revendication 4, selon une quantité allant de 1 à 1000 g/100 kg de semences.

**6.** Méthode de contrôle de champignons néfastes phytopathogènes, comprenant le traitement des champignons, de leur habitat ou des semences, du sol ou des plantes à protéger contre une attaque fongique, par une quantité efficace d'un mélange tel que défini selon l'une quelconque des revendications 1 à 3 ou de la composition telle que définie selon la revendication 4.

**7.** Méthode d'amélioration de la santé des plantes, comprenant le traitement d'une plante, de son matériel de propagation, du lieu où la plante se développe ou doit se développer, par une quantité efficace du mélange tel que défini selon l'une quelconque des revendications 1 à 3 ou de la composition telle que définie selon la revendication 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007012598 A
- EP 2010052873 W
- WO 08092836 A
- WO 09119072 A
- WO 0990181 A
- EP 71792 A
- EP 141317 A
- WO 03009687 A
- WO 05087771 A
- WO 05087772 A
- WO 05087773 A
- WO 2005087772 A
- WO 2006087325 A
- WO 2006092428 A
- WO 0316303 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A


### Non-patent literature cited in the description


- Agglomeration. Chemical Engineering. 04 December 1967, 147-48
- Perry's Chemical Engineer's Handbook. McGraw-Hill, 1963, 8-57
- Klingman: Weed Control as a Science. J. Wiley & Sons, 1961
- **HANCE et al.** Weed Control Handbook. Blackwell Scientific, 1989
- **MOLLET, H. ; GRUBEMANN, A.** Formulation technology. Wiley VCH Verlag, 2001
- *Pest Managem. Sci.,* 2005, vol. 61, 246
- *PEST MANAGEM. SCI.,* 2005, vol. 61, 258
- *PEST MANAGEM. SCI.,* 2005, vol. 61, 277
- *PEST MANAGEM. SCI.,* 2005, vol. 61, 269
- *PEST MANAGEM. SCI.,* 2005, vol. 61, 286
- *PEST MANAGEM. SCI.,* 2008, vol. 64, 326
- *PEST MANAGEM. SCI.,* 2008, vol. 64, 332
- *Weed Sci.,* 2009, vol. 57, 108
- *Austral. J. Agricult. Res.,* 2007, vol. 58, 708
- *Science,* 2007, vol. 316, 1185
- **COLBY, S.R.** Calculating synergistic and antagonistic responses of herbicide combinations. *Weeds,* 1967, vol. 15, 20-22